# EUROPÄISCHE PATENTSCHRIFT

(11) **EP 0 377 012 B1**
(45) Veröffentlichungstag und Bekanntmachung des Hinweises auf die Patenterteilung: **15.02.1995**
(21) Anmeldenummer: 89906096.6
(22) Anmeldetag: 31.05.1989
(51) Int. Cl.: G01N 21/39

(54) **VERFAHREN UND VORRICHTUNG ZUR SPEKTROSKOPISCHEN MENGENBESTIMMUNG VON GASEN IN GASGEMISCHEN**
PROCESS AND DEVICE FOR SPECTROSCOPIC QUANTITATIVE DETERMINATION OF GASES IN GAS MIXTURES
PROCEDE ET DISPOSITIF DE DEPISTAGE SPECTROSCOPIQUE QUANTITATIF DES GAS CONTENUS DANS UN MELANGE DE GAS

(30) Priorität: 08.06.1988 DE 3819531
(43) Veröffentlichungstag der Anmeldung: 11.07.1990
(60) Teilanmeldung: 93120006.7
(73) Patentinhaber: Riener, Karl Stefan, 4563 Micheldorf (AT)
(72) Erfinder: SZEPAN, Reiner, D-8000 München 81 (DE)
(74) Vertreter: von Samson-Himmelstjerna, Friedrich R., Dipl.-Phys.
(86) Internationale Anmeldenummer: EP8900596
(87) Internationale Veröffentlichungsnummer: WO8912222

(56) Entgegenhaltungen:
- US-A- 4 410 273
- US-A- 4 441 815
- Review of Scientific Instruments, Vol. 54, No. 6, June 1983, American Institute of Physics, (New York US), W. Olsowski et al.: "Filter correlation photometer", pages 722-727, see part 1: 1. "Apparatus"; pages 722-723
- Applied Optics, Vol. 24, No. 17, 01 September 1985, Optical Society of America, (New York, US), A. P. Force et al.: "Laser remote sensing of atmospheric ammonia using a CO2lidar system", pages 2837-2841, see page 2837-2838, part II: "Experimental Apparatus"

## Beschreibung

Die Erfindung betrifft ein Verfahren nach dem Oberbegriff von Patentanspruch 1, sowie eine Vorrichtung zur Durchführung eines derartigen Verfahrens.

Die Mengenbestimmung von bestimmten Gasen in Gasgemischen erfolgt anhand der Absorption von Strahlung mit für das betreffende Gas charakteristischen Wellenlängen. Molekülgase verfügen insbesondere dazu über eine ausgeprägte Charakteristik im fernen Infrarotbereich.

Zur spektralen Unterscheidung der charakteristischen Absorption durch das gesuchte Gas von einer Hintergrundstrahlung bzw. der uncharakteristischen Strahlungsdämpfung auf dem Übertragungsweg wird die Emission einer geeigneten Strahlungsquelle nach üblichen differentiellen Analyseverfahren bei einer für das bestimmte Gas charakteristischen Wellenlänge bzw. bei einer diesbezüglich benachbarten unspezifischen Wellenlänge mit jeweiliger Unterbrechung periodisch sequenziert.

Als Strahlungsquellen bieten sich Laser an; im sichtbaren Bereich kommt hierfür ein Farbstofflaser und im Infrarotbereich ein geeigneter Molekülgaslaser in Frage. Letztere nutzen die Schwingungs-/Rotationsübergänge der betreffenden Gase. Der Molekülgaslaser wird mittels eines von einer Mikoropositioniervorrichtung getragenen Resonatorspiegels bzw. optischen Gitters auf die Wellenlängen der jeweils gewünschten Emissionslinien abgeglichen. Die Mikroposition kann durch elektrische Signale zur Erzeugung der periodischen Emissionssequenz mit unterschiedlichen Wellenlängen gesteuert werden.

In diesem Zusammenhang ist die Mengenbestimmung von Ammoniak in Rauchgasen von großtechnischer Bedeutung. Rauchgase entstehen bei jeder atmosphärischen Verbrennung und mit ihnen zwangsläufig Stickoxide NOₓ. Diese lassen sich einerseits katalytisch durch Ammoniakspeisung zu schadfreien Produkten reduzieren, andererseits ist der sogenannte "Schlupf", d. h. ein merklicher Ammoniaküberschuß, unerwünscht.

Naturgesetzlich fallen je eine Linie der Schwingungs-/Rotationsbanden von Ammoniak bzw. ¹³C¹⁶O₂ bei der Wellenlänge von 9.89 »m unter Normal- oder den Betriebsbedingungen einer Feuerungsanlage innerhalb der Linienbreiten zusammen, so daß die Absorption der Strahlung eines abgestimmten ¹³C¹⁶O₂-Lasers in einem Gasgemisch Auskunft über den Ammoniakgehalt gibt.

Bei Spurenanteilen des gesuchten Gases - hier Ammoniak im Rauchgas - unterscheidet sich die spezifische und unspezifische Absorption in der Laseremissionsfolge allerdings nur wenig, so daß die Transmissionssignale der Sequenz nur gering voneinander abweichen und zudem noch mit inkohärenten Signalrauschbeiträgen aus der Laseremission, der Störung des Meßpfades und aus der Detektorvorrichtung befrachtet sind. Diese Gegebenheiten erfordern lange Signalintegrationszeiten um die notwendigen, etwa prozeßtechnisch geforderten Signalsicherheiten zu erlangen, was hingegen hohe betriebliche Stabilitätsanforderungen an die Anordnung voraussetzt.

Nach dem Stand der Technik ist beispielsweise aus A.P. Force et al., Applied Optics, Band 24, Nr. 17, Seiten 2837-2841, 1. September 1985, Optical Society of America, New York, US ein Ammoniakabsorptionsmeßverfahren und eine daraus resultierende Kalibrierung bekannt. Dabei werden zunächst zwei für Ammoniak charakteristische Lichtwellenlängen auf ein Gasgemisch gestrahlt. Schließlich werden nur die über die Zeit ermittelten Impulse nach Abschwächung durch Absorption ausgewertet. Das Maß für die Konzentration des Ammoniaks wird aus der Differenz der Absorption des Lichtes, d.h. seiner Dämpfung bei den verschiedenen Wellenlängen gewonnen.

Ferner ist in der US-PS 4,410,273 ein in ähnlicher Weise arbeitendes Verfahren offenbart. Das Meßergebnis wird durch Vergleich der Lichtspektren einer Meßstrecke und einer Eichstrecke ermittelt.

Diese bekannten Verfahren zur Bestimmung der Konzentration eines bestimmten Gases eines Gasgemisches mittels Laser basieren auf der Auswertung des Signales im Zeitbereich. Auswertemäßig kann dabei jedoch nicht zwischen Signalanteilen unterschieden werden, die durch Störungen des Lichtstrahles oder durch die Konzentration des bestimmten Gases selbst verursacht werden. Daher ist die Zuverlässigkeit des Meßwertes bei niedrigen Rauschabständen (Verhältnis von Nutzsignal und Störsignal) entsprechend niedrig und die Meßzeit entsprechend hoch.

Aus W. Olsowski et al., Review of Scientific Instruments, Band 54, Juni 1983, Seiten 722-727, American Institute of Physics, New York, US ist auch bekannt, unter Verwendung von Fourieranalysen die Kalibrierung eines Photometers durchzuführen. Die beschriebene Anwendung schränkt sich dabei auf die erste und zweite Fourierkomponente ein.

Aufgabe der Erfindung ist es, ein gattungsgemäßes Verfahren sowie eine gattungsgemäße Vorrichtung so weiterzubilden, daß ein bestimmter Gasanteil eines Gasgemisches besser ermittelt werden kann.

Diese Aufgabe wird verfahrensmäßig durch die kennzeichnenden Merkmale des Patentanspruchs 1 und vorrichtungsmäßig durch die kennzeichnenden Merkmale des Patentanspruchs 7 gelöst.

Bei einer vorteilhaften Ausführungsform des erfindungsgemäßen Verfahrens werden die harmonischen Signalanteile wenigstens einer ungeraden Fourier-Frequenz zu denen einer geraden Fourier-Frequenz ins Verhältnis gesetzt, und dieses Verhältnis ist ein Maß für die charakteristische Absorption.

Bei einer weiteren vorteilhaften Ausführungsform des erfindungsgemäßen Verfahrens nimmt die zweite Fourierkomponente des elektrischen Signals ein Maximum an.

Bei einer anderen vorteilhaften Ausführungsform des erfindungsgemäßen Verfahrens erfolgt die Emission der benutzten Strahlungsimpulse mit jeweils konstanter Leistung, und die Impulszentren haben den Abstand der halben Emissionsperiode.

Bei einer weiteren vorteilhaften Ausführungsform des erfindungsgemäßen Verfahrens sind die Emissionen beider die unterschiedlichen Wellenlängen erzeugenden Übergänge gleichdauernd und durch gleichdauernde emissionsfreie Phasen getrennt.

Bei einer anderen vorteilhaften Ausführungsform des erfindungsgemäßen Verfahrens sind die jeweiligen Emissionsphasen und die emissionsfreien Phasen gleichdauernd.

Bei einer vorteilhaften Ausführungsform der erfindungsgemäßen Vorrichtung ist das Gas Ammoniak und die Lichtquelle ein Laser, insbesondere ein ¹³C¹⁶O₂-Laser, der periodisch alternierend Strahlung des quantenmechanischen P8II-Übergangs des Rotations-/Schwingungsspektrums und eines benachbarten Überganges (z. B. P6II bzw. P10II), emittiert.

Bei einer anderen vorteilhaften Ausführungsform der erfindungsgemäpen Vorrichtung ist eine Schaltung vorgesehen, mit der die elektrischen Signale aneinander angeglichen werden.

Bei einer weiteren vorteilhaften Ausgestaltung der erfindungsgemäßen Vorrichtung ist die Emissionsdauer der größeren Leistung des Lasers 1 mittenzentriert verringert oder vergrößert.

Bei einer anderen vorteilhaften Ausführungsform der erfindungsgemäßen Vorrichtung ist ein Infrarotdetektor vorgesehen, der Signalamplituden aufweist, die von der wellenlängensequenzierten Laseremission bzw. der Transmission eines ammoniakhaltigen Gases herrühren, und es ist eine Symmetrie-Mischerschaltung vorgesehen, die mit einem Signal der zweiten Fourier-Frequenz der Emissionsperiode verknüpft wird.

Bei einer weiteren vorteilhaften Ausführungsform der erfindungsgemäßen Vorrichtung werden vorgenannte Mischprodukte nach einer Filterung in einer Vorrichtung einer Synchron-Gleichrichtung unterworfen, die mit einem Signal der ersten Fourrier-Frequenz der Emissionsperiode gesteuert wird.

Bei einer anderen vorteilhaften Ausgestaltung der erfindungsgemäßen Vorrichtung ist eine Quotientenschaltung vorgesehen, mittels derer Signalverhältnisse aus den gefilterten Gleichrichterprodukten und dem Gleichanteil des Mischproduktes eine von der Emissionsstärke der Lichtquelle und von den nichtspektralen Transmissionsminderungen unabhängige Größe erzeugt wird.

Bei einer weiteren vorteilhaften Ausgestaltung der erfindungsgemäßen Vorrichtung werden die Signalamplituden aus einem Infrarotdetektor, die von der wellenlängensequenzierten Emission der Lichtquelle herrühren als das Fehlersignal einer proportionalen Regelschleife zugeführt, welche die sequentielle Verstärkung des Signals des Infrarotdetektors bzw. die Emissionsdauer einstellt.

Bei einer weiteren vorteilhaften Ausführungsform der erfindungsgemäßen Vorrichtung wird ein optischer Resonator des Lasers periodisch wellenlängenmoduliert, und die dabei entstehenden modulationsfrequenten Signalanteile eines Infrarotdetektors dienen infolge der Laseremissionsschwankung als Fehlergröße in einer integralen Regelschleife zur Maximierung der jeweiligen Emissionen.

Bei einer weiteren vorteilhaften Ausgestaltung der erfindungsgemäPen Vorrichtung ist eine Referenzküvette angeordnet, die von der wellenlängensequenzierten Emission des Lasers durchstrahlt wird, wobei eine betriebliche Kenngröße erzeugt wird, die der Referenzgasmenge proportional ist.

Ausführungsbeispiele der Erfindung sind in den Zeichnungen dargestellt und werden im folgenden näher erläutert:

Es zeigen:
- Fig. 1: eine schematische Darstellung der optischen Anordnung gemäß der Erfindung;
- Fig. 2: eine schematische Schaltungsanordnung zur Gasmengenbestimmung;
- Fig. 3: eine schematische Schaltungsanordnung zur Signalkonditionierung;

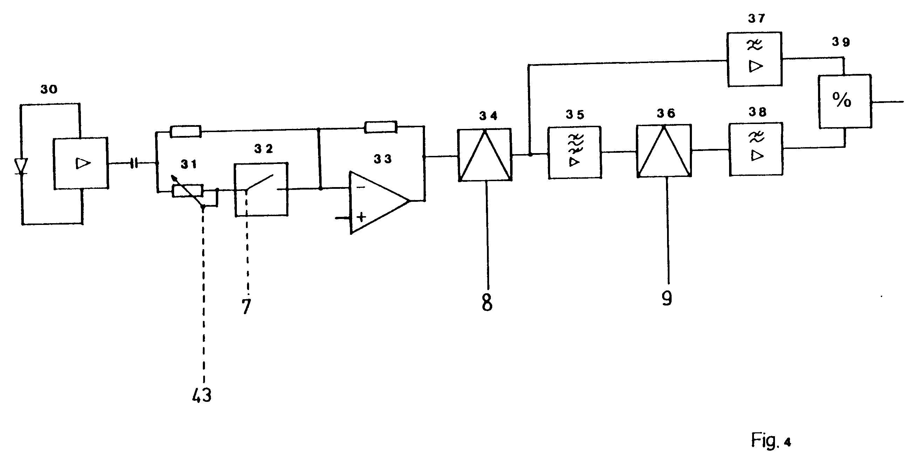

- Fig. 4: eine schematische Schaltungsanordnung zur Eichung;
- Fig. 5: elektronische Signalverläufe;

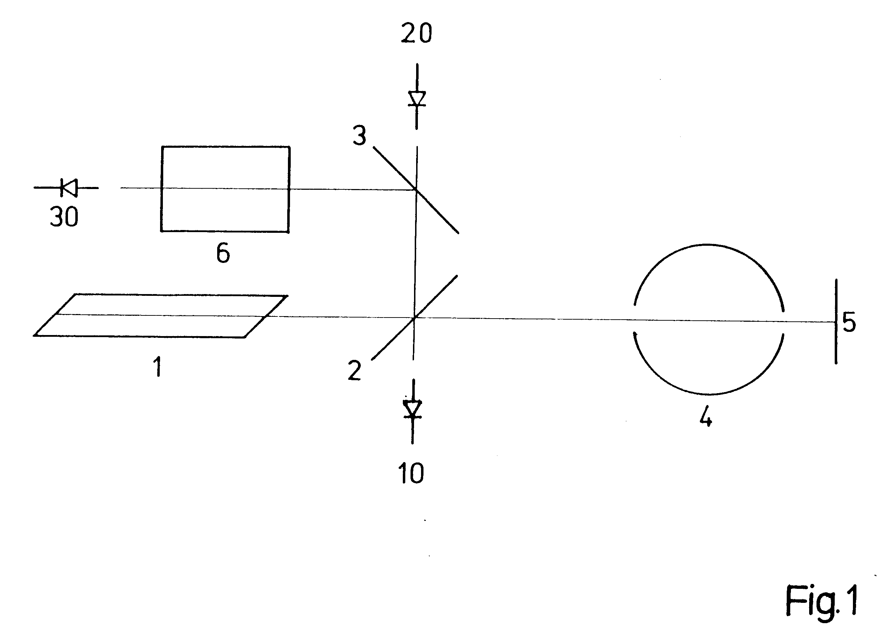

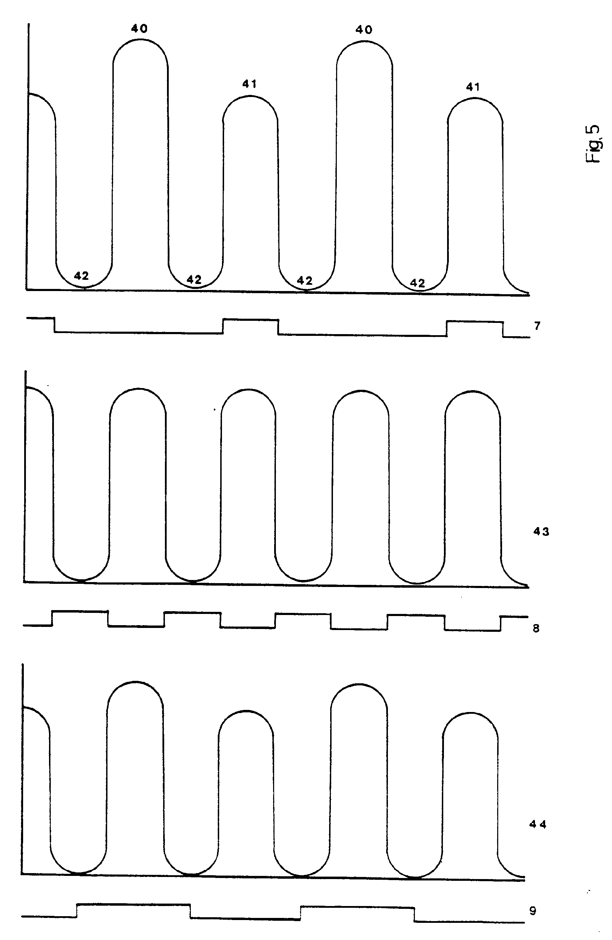

Fig. 1 zeigt einen den Analysenraum mit einem ein gesuchtes Gas (4) durchstrahlenden Laser (1), der eine periodische Sequenz von zwei, durch Pausen oder zumindest durch Abschwächungsphasen (42) getrennte Emissionen (40, 41) mit jeweils zugeordneter, alternierender Wellenlänge, wie auch in Fig. 5 gezeigt wird, erzeugt. Diese Periode wird nachfolgend als die Emissionsperiode und der Reziprokwert ganzzahliger Teilverhältnisse der Emissionsperiode als Fourierfrequenz der dem Teilverhältnis entsprechenden Ordnung bezeichnet.

Zur Ammoniakgasmengenbestimmung z. B. in Rauchgasen bietet sich aufgrund der selektiven Eigenschaften und des Wirkungsgrades vorteilhafterweise die Emission des quantenmechnischen Übergangs P8II des Rotations-/Schwingungsspektrums eines ¹³C¹⁶O₂-Lasers als charakteristischer Nachweis an.

Zur signalprozeßtechnischen Beherrschung der differentiell geringen, aufgrund der Absorption des gesuchten Gases (4) auf einem optischen Meßweg (Strahlenteiler 2, Analyseraum mit Gas 4, Retrospiegel 5, Strahlungsdetektor 10) in Erscheinung tretenden Transmissionsänderung neben dem dominanten Emissionspegel des Lasers (1) und der Rauschsignalüberlagerung kommen die schmalbandigen, kohärenten Signalprozeßmethoden der gegenständlichen Erfindung in Anwendung. Demnach wird ein elektrisches Wechselsignal mit der Frequenz einer ungeradzahligen Fourierkomponente der Emissionsperiode erzeugt, dessen Amplitude proportional der Differenz in der Laseremissionsleistung bei beiden Lichtpulsen und den Transmissionsverlusten ist, die sich aus der charakteristischen Absorption auf der Meßstrecke ergeben, und dessen Pegel zu Null wird, wenn die Differenz in der Laseremissionsleistung bei beiden Lichtpulsen zu Null wird, und ebenfalls die Transmissionsverluste zu Null werden. Zudem wird ein elektrisches Signal mit der Frequenz einer geradzahligen Fourierkomponente der Emissionsperiode erzeugt, dessen Amplitude proportional der Laseremissionsleistung ist. Dazu bedarf es der Konditionierung der Emission oder der elektrischen Signale, die mittels geeigneter Strahlungsdetektoren (10, 20, 30) nebst Verstärker als Empfänger der Emission gewonnen werden.

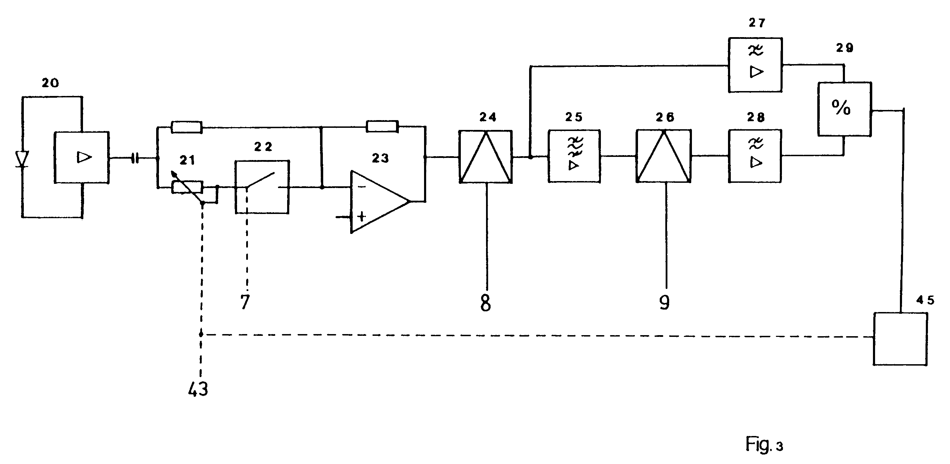

Mit Hilfe eines eigenen optischen Weges (2,20) - d. h. eines eigenen Weges vom Laser (1) über den Strahlteiler (2) zum Detektor (20) -, der keine Anteile des gesuchten Gases (4) enthält, und eines eigenen elektrischen Signalwegs (20...29) erfolgt diese Signalkonditionierung auf 2 Arten mittels Regelanordnungen, wie z. B. in Fig. 3 gezeigt.

Der Signalabgleich kann auf zwei verschiedene Arten erfolgen: Wie in Fig. 5 gezeigt, sind die Zentren der beiden Strahlungsimpulse (40, 41) mit jeweils konstanter Leistung durch die halbe Emissionsperiode getrennt. Der Strahlungsimpuls (40) größerer Leistung wird mittenzentriert so verlängert oder gekürzt, daß die erste Fourierkomponente der Emissionsperiode am Detektor (30) verschwindet. Es kann hierbei auf die Komponenten (11, 12, 13, 21, 22, 23, 31, 32, 33) verzichtet werden, die im folgenden noch näher erläutert werden.

Die Zentren der beiden Strahlungsimpulse (40, 41) mit jeweils konstanter Leistung sind durch die halbe Emissionsperiode getrennt. Mittels des Summationsverstärkers (23) wird eine angleichende Anhebung der Verstärkung des schwächeren Impulses (41) am Detektor (20) bzw. eine angleichende Abschwächung des stärkeren Impulses durch Zuschaltung (22) bzw. Abschaltung eines elektronischen Potentiometers (21) in der zugeordneten Emissionsphase (7) vorgenommen, so daß die erste Fourierkomponente (44 bzw. 43) der Emissionsperiode am Ausgang des Verstärkers (23) verschwindet.

Das konditionierte Signalgemisch am Eingang des Symmetriemischers (24) wird in diesem mit einem Signal (8) der zweiten Fourierfrequenz der Emissionsperiode gemischt, wobei die Signalanteile eben dieser Frequenz verschwinden bzw. geschwächt werden, so daß nach der Filter- und ggf. Verstärkerschaltung (25) lediglich noch Signalanteile der ersten Fourierfrequenz der Emissionsperiode vorliegen, die aus einer Verstimmung der Signalkonditionierung nach Fig. 3 stammen. Die Magnitude und das Vorzeichen derartiger Signalanteile liegen mit dem Ausgangssignal (28) des Synchrongleichrichters (26) vor, der mit einem Signal der ersten Fourierfrequenz (9) der Emissionsperiode geschaltet wird. Die Gleichrichtersignale (24, 26) werden von Tiefpaßschaltungen (27, 28) geglättet, wobei die Summengruppenlaufzeit der Filter (25, 28) gleich der Gruppenlaufzeit des Filters (27) ist. Eine Quotientenschaltung (29) liefert einen von der Strahlungsintensität unabhängigen Regelfehler, der über eine Regelschaltung (45) auf die Stellglieder (Mikropositionierung bzw. Potentiometer (43)) so einwirkt, daß die erste Fourierkomponente am Mischereingang (24) verschwindet.

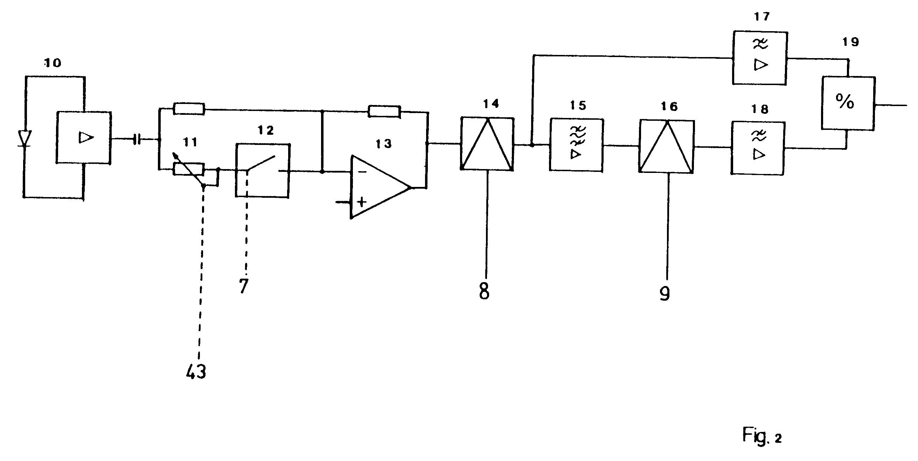

Die gascharakteristische Transmissionsschwächung auf dem Meßweg (2, 4, 5, 10) ist ein Maß für die Konzentration des gesuchten Gases (4). Diese Größe wird erfindungsgemäß nach erfolgter Signalkonditionierung (20...29, 45) als elektrisches Signal einer ungeradzahligen - vorzugsweise der ersten - Fourierfrequenz der Emissionsperiode dargestellt; der in Fig. 2 dargestellte Aufbau des Meßsignalpfades (10.. .19) entspicht identisch dem des Konditionierungspfades (20...29).

Mit dem Strahlungsdetektor (10) wird die wellenlängenspezifische Transmission des Prüfgases (4) gemessen und ggf. verstärkt. Da sich die Emissionsleistungen der Impulse (40, 41) bei den benutzten Wellenlängen unterscheiden, wird mittels der Konditionierung eine Pulsbreitenkorrektur bzw. anhand des Summationsverstärkers (13) eine angleichende Anhebung der Verstärkung des schwächeren Emissionssignals bzw. eine angleichende Abschwächung des stärkeren Emissionssignals durch Zuschaltung (12) bzw. Abschaltung eines elektronischen mit dem Potentiometer (21) gleichlaufenden (43) Potentiometers (11) in der zugeordneten Emissionsphase (7) vorgenommen.

Die Existenz von Signalanteilen der ersten Fourierfrequenz in den Mischprodukten (15) ist mit erfolgter Konditionierung (20...29, 45) einzig auf die spezifische Strahlungsabsorption des gesuchten Gases (4) zurückzuführen; ihre Größe ist proportional zur Konzentration des gesuchten Gases (4). Mit diesem kohärenten Analyseverfahren gelingt es erfindungsgemäß, ein sehr schwaches gasspezifisches Signal neben dem dominaten Emissionssignal zu isolieren; aus den Mischpodukten wird das Signal der ersten Fourierfrequenz der Emissionsperiode mit einem Filter (15) getrennt und ggf. verstärkt. Schließlich wird das gasspezifische Nutzsignal dem mit der ersten Fourierfrequenz geschalteten Synchrongleichrichter (16) zugeführt, welcher so die Mächtigkeit des gascharakteristischen Nutzsignals wiedergibt. Der Quotient (19) der gefilterten Signale (17, 18) stellt eine intensitätsunabhängige, der Konzentration des gesuchten Gases (4) proportionale und, dank der kohärenten Signalverarbeitungstechnik, eine hochaufgelöste Prozeßgröße dar. Die Beiträge aus inkohärenten Signalrauschanteilen werden nach diesem Verfahren und Vorrichtung zur selektiven spektroskopischen Mengenbestimmung von Gasen in Gasgemischen so reduziert, daß prozeßtechnisch geforderte schnelle, gesicherte Datenfolgen (19) vorliegen.

Ein apparatives Stabilitätsproblem ergibt sich bei der Verwendung von Lasern (1) als Strahlungsquelle mit der Zentrierung des optischen Resonators bzw. Filters auf die jeweiligen Emissionsmaxima. Die resonator- bzw. filtertraende und elektrisch angetriebene Mikropositioniervorrichtung führt eine Schwingbewegung aus, welche die alternierende Emission von Strahlung bei mindestens zwei Wellenlängen bewirkt. Dieser Schwingung ist eine kleine periodische, langsamere Bewegung überlagert. Der spektrale Signalanteil der Frequenz dieser Abtastbewegung im Fehlersignal (29) des Proportionalreglers (45) zur Konditionierung stellt zudem ein Fehlersignal der Integralregelung zur emissionsmaximierenden Mikropositionierung dar.

Ein anderes apparatives Stabilitätsproblem stellt sich bei der Inbetriebnahme des Verfahrens und der Vorrichtung zur selektiven spektroskopischen Mengenbestimmung von Gasen (4) in Gasgemischen. Es wird erfindungsgemäß durch einen Eichpfad (1, 2, 3, 6, 30) gelöst. Diese Problemlösung ist bei der Inbetriebnahme redundanter Systeme mit Betriebsaufgaben von außerordentlicher Bedeutung.

Ein Strahlenteiler (3) koppelt aus der emittierten Laserstrahlung einen Anteil aus, der nach dem Durchstrahlen einer, das gesuchte Gas enthaltenden Küvette (6) auf den Strahlendetektor (30) fällt. Die Signalaufbereitung (30...39) entspricht der des Nutzsignalpfades (10...19) bzw. Konditionierungspfades (20...29). Die Schaltungsanordnung erzeugt ein Signal 39, das einer Eichgasmenge in der Küvette (6) in vorgegebenen Toleranzbereichen zugeordnet ist.

Die Dejustierung der Laseranordnung ist im wesentlichen auf die Komponentenalterung und auf thermische Einflüsse zurückzuführen. Beim Einschalten wird ein ggf. prozessorgeührter Suchlauf gestartet, der den Bereich der wellenlängenabgleichenden Mikropositioniervorrichtung des Lasers (1) auf die Referenzbedingung im Eichmeßpfad (3, 6, 30) absucht und die Betriebspositionierung vornimmt.

Die Anordnung (2...45) kann so gestaltet werden, daß beim Ausfall des betrieblichen Lasers (1) die Emission eines weiteren Lasers in die Anordnung eingekoppelt wird.

Die Absolutmengenbestimmung des Ammoniakgehalts im Prüfgas (4) berechnet sich in einem Signalprozeßrechner anhand der Prozeßmeßdaten (29), der Emissionsbreite des Lasers (1), der Absorptionsbreite des Ammoniakdampfes und des Linienversatzes von Laseremission und Ammoniakabsorption.

## Patentansprüche

1. Verfahren zur Bestimmung der Konzentration eines bestimmten Gases in einem Gasgemisch, wobei das Gasgemisch periodisch alternierend mit Laserstrahlen vorgegebener Intensität beaufschlagt wird, und die aus dem Gasgemisch austretende Strahlung in ein elektrisches Signal gewandelt wird, dessen jeweilige Amplituden abhängig sind von der Absorption bzw. Transmission des Laserlichts dadurch gekennzeichnet,
- daß die Laserstrahlen derart ausgewählt werden, daß sie eine für das bestimmte Gas charakteristische und eine hierfür im Laseremissionsspektrum benachbarte uncharakteristische Wellenlänge aufweisen,
- daß das elektrische Signal in seine Fourierkomponenten zerlegt wird,
- daß die Fourierkomponenten als sich wiederholender Fourierkomponentenzug bestehend aus Fourierkomponentenpaaren dargestellt werden, und
- daß aus dem Fourierkomponentenzug die Amplituden der geraden und ungeraden Fourierkomponenten, die jeweils ein Fourierkomponentenpaar bilden, verglichen werden, um die Konzentration des bestimmten Gases zu ermitteln.

2. Verfahren nach Anspruch 1, dadurch gekennzeichnet, daß die Amplituden wenigstens einer ungeraden Fourier-Frequenz zu denen wenigstens einer geraden Fourier-Frequenz ins Verhältnis gesetzt werden, und dieses Verhältnis ein Maß für die charakteristische Absorption ist.

3. Verfahren nach wenigstens einem der vorstehenden Ansprüche, dadurch gekennzeichnet,
daß mindestens eine gerade Fourierkomponente des elektrischen Signals vorzugsweise die zweite ein Maximum annimmt.

4. Verfahren nach wenigstens einem der vorstehenden Ansprüche, dadurch gekennzeichnet,
daß die Emission der benutzten Strahlungsimpulse mit jeweils konstanter Leistung erfolgt, und daß die Impulszentren den Abstand der halben Emissionsperiode aufweisen.

5. Verfahren nach wenigstens einem der vorstehenden Ansprüche, dadurch gekennzeichnet,
daß die Emissionsphasen bei beiden Wellenlängen jeweils die gleiche Länge haben und durch jeweils gleichdauernde emissionsfreie Phasen voneinander getrennt sind.

6. Verfahren nach Anspruch 5, dadurch gekennzeichnet,
daß die jeweiligen Emissionsphasen und die emissionsfreien Phasen gleichdauernd sind.

7. Vorrichtung zur Durchführung des Verfahrens nach Anspruch 1 mit einer monochromatischen Lichtquelle, die periodisch alternierend Licht wenigstens zweier Wellenlängen emittiert, mit einem Detektor zum Empfang der aus dem Gasgemisch austretenden Strahlung und zur Wandlung dieser empfangenen Strahlung in ein elektrisches Signal, gekennzeichnet durch
eine Einrichtung (14, 15, 16, 17, 18, 19; 24, 25, 26, 27, 28, 29; 34, 35, 36, 37, 38, 39) zur Zerlegung des elektrischen Signals in seine Fourierkomponenten, wobei die Fourierkomponenten als sich wiederholender Fourierkomponentenzug bestehend aus Fourierkomponentenpaaren dargestellt werden und aus den Amplituden der geraden und ungeraden Fourierkomponenten, die jeweils ein Fourierkomponentenpaar bilden, die Konzentration des bestimmten Gases ermittelt wird.

8. Vorrichtung nach Anspruch, dadurch gekennzeichnet,
daß das bestimmte Gas Ammoniak und die Lichtquelle (1) ein Laser, insbesondere ein ¹³C¹⁶O₂-Laser ist, der periodisch alternierend Strahlung des quantenmechanischen P8II-Übergangs des Rotations-/Schwingungsspektrums und eines benachbarten Überganges, emittiert.

9. Vorrichtung nach Anspruch 7 und 8, dadurch gekennzeichnet,
daß eine Schaltung (20-29) vorgesehen ist, mit der die den beiden Wellenlängen zuzuordnenden Abschnitte (40, 41) des elektrischen Signals einander angeglichen werden.

10. Vorrichtung nach Anspruch 9, dadurch gekennzeichnet,
daß mit Hilfe eines Stellgliedes (21) der Schaltung (20-29) die Pulse des elektrischen Signales derart aneinander angeglichen werden können, daß am Ausgang eines Verstärkers (23) die ungeraden Fourierkomponenten verschwinden und an den Ausgängen von Verstärkern (13 bzw. 33) bei gleicher Position entsprechender Stellglieder (11 bzw. 31) nur ungerade Fourierkomponenten auftreten, die durch das bestimmte Gas verursacht wurden, dessen Konzentration zu ermitteln ist.

11. Vorrichtung nach Anspruch 7 bis 10, dadurch gekenn zeichnet,
daß der Laser (1) derart ausgelegt ist, daß die Emissionsdauer des Lichtpulses bei der Wellenlänge, bei welcher der Laser (1) die größere Leistung emittiert, mittenzentriert verringert oder vergrößert ist.

12. Vorrichtung nach einem der Ansprüche 7 bis 11, dadurch gekennzeichnet,
daß je eine Symmetrie-Mischerschaltung (14, 24, 34) vorgesehen ist, die mit einem Signal der zweiten Fourier-Frequenz der Emissionsperiode (8) verknüpft wird.

13. Vorrichtung nach wenigstens einem der Ansprüche 7 bis 12, gekennzeichnet durch
Mittel, mit denen Mischprodukte (14, 24, 34) nach einer Filterung in je einer Einrichtung (15, 25, 35) je einer Synchron-Gleichrichtung (16, 26, 36) unterworfen werden, die mit einem Signal der ersten Fourier-Frequenz der Emissionsperiode (9) gesteuert wird.

14. Vorrichtung nach wenigstens einem der Ansprüche 7 bis 13, gekennzeichnet durch
je eine Quotientenschaltung (19, 29, 39), mittels derer je ein Signalverhältnis aus dem gefilterten Gleichrichterprodukt (18, 28, 38) und dem Gleichanteil des Mischproduktes (17, 27, 37), eine von der Emissionsstärke der Lichtquelle (1) und von den nichtspektralen Transmissionsminderungen unabhängige Größe, erzeugt wird.

15. Vorrichtung nach wenigstens einem der Ansprüche 7 bis 14, dadurch gekennzeichnet,
daß die Signalamplituden aus einem Detektor, insbesondere einem Infrarotdetektor (20), die von der wellenlängensequenzierten Emission der Lichtquelle (1) herrühren als das Fehlersignal einer proportionalen Regelschleife zugeführt werden, welche die sequentielle Verstärkung des Signals des Infrarotdetektors (20) bzw. die Emissionsdauer einstellt.

16. Vorrichtung nach wenigstens einem der Ansprüche 8 bis 15, gekennzeichnet durch
einen optischen Resonator des Lasers (1), der periodisch wellenlängenmoduliert wird, wobei die dabei entstehenden modulationsfrequenten Signalanteile des Infrarotdetektors (10, 20, 30) infolge der Laseremissionsschwankung als Fehlergröße in einer integralen Regelschleife zur Maximierung der jeweiligen Emissionen dienen.

## Claims

1. Method for determining the concentration of a particular gas in a gas mixture, wherein the gas mixture is subjected in a periodically alternating manner to laser beams of given intensity, and the radiation issuing from the gas mixture is converted to an electrical signal, of which the respective amplitudes are dependent on the absorption or transmission of the laser light, characterised
- in that the laser beams are selected such that they have a wavelength characteristic of the particular gas and one which is uncharacteristic thereof and adjacent in the laser emission spectrum,
- in that the electrical signal is broken down into its Fourier components,
- in that the Fourier components are represented as a repeating Fourier component train consisting of pairs of Fourier components, and
- in that from the Fourier component train the amplitudes of the even and odd Fourier components which in each case form a pair of Fourier components are compared in order to determine the concentration of the particular gas.

2. Method according to claim 1, characterised in that the amplitudes of at least one odd Fourier frequency are set in proportion to those of at least one even Fourier frequency, and this proportion is a measure of the characteristic absorption.

3. Method according to one or more of the preceding claims, characterised in that at least one even Fourier component of the electrical signal, preferably the second one, assumes a maximum.

4. Method according to one or more of the preceding claims, characterised in that emission of the radiation pulses used takes place with in each case constant output, and in that the pulse centres have a spacing of half the emission period.

5. Method according to one or more of the preceding claims, characterised in that the emission stages at both wavelengths have the same length and are separated from each other by emission-free stages of the same duration.

6. Method according to claim 5, characterised in that the respective emission stages and the emission-free stages are of the same duration.

7. Apparatus for carrying out the method according to claim 1 with a monochromatic light source which in a periodically alternating manner emits light of at least two wavelengths, with a detector for receiving the radiation issuing from the gas mixture and for converting this received radiation to an electrical signal, characterised by a device (14, 15, 16, 17, 18, 19; 24, 25, 26, 27, 28, 29; 34, 35, 36, 37, 38, 39) for breaking down the electrical signal into its Fourier components, wherein the Fourier components are represented as a repeating Fourier component train consisting of pairs of Fourier components, and from the amplitudes of the even and odd Fourier components which in each case form a pair of Fourier components the concentration of the particular gas is determined.

8. Apparatus according to claim, characterised in that the particular gas is ammonia and the light source (1) is a laser, in particular a ¹³C¹⁶O₂ laser which in a periodically alternating manner emits radiation of the quantum mechanical P8II transition of the rotational vibration spectrum and an adjacent transition.

9. Apparatus according to claims 7 and 8, characterised in that a circuit (20-29) is provided with which the segments (40, 41) of the electrical signal to be assigned to the two wavelengths are matched with each other.

10. Apparatus according to claim 9, characterised in that by means of a final control element (21) of the circuit (20-29) the pulses of the electrical signal can be matched with each other in such a way that at the output of an amplifier (23) the odd Fourier components disappear and at the outputs of amplifiers (13 or 33) with the same position of corresponding final control elements (11 or 31) only odd Fourier components appear, which have been caused by the particular gas of which the concentration is to be determined.

11. Apparatus according to claims 7 to 10, characterised in that the laser (1) is designed in such a way that the emission time of the light pulse at the wavelength at which the laser (1) emits the greater output is decreased or increased with mid-centring.

12. Apparatus according to any of claims 7 to 11, characterised in that in each case there is provided a symmetry mixer circuit (14, 24, 34) which is linked to a signal with the second Fourier frequency of the emission period (8).

13. Apparatus according to one or more of claims 7 to 12, characterised by means with which mixing products (14, 24, 34) after filtering each in a device (15, 25, 35) are subjected each to synchronous rectification (16, 26, 36) which is controlled with a signal with the first Fourier frequency of the emission period (9).

14. Apparatus according to one or more of claims 7 to 13, characterised by in each case a quotient circuit (19, 29, 39) by means of which in each case a signal ratio is generated from the filtered rectifier product (18, 28, 38) and the direct portion of the mixing product (17, 27, 37), a quantity independent of the intensity of emission of the light source (1) and the non-spectral transmission decreases.

15. Apparatus according to one or more of claims 7 to 14, characterised in that the signal amplitudes from a detector, in particular an infrared detector (20), which originate from wavelength-sequenced emission of the light source (1), are delivered as the error signal to a proportional control loop which adjusts sequential amplification of the signal of the infrared detector (20) or the emission time.

16. Apparatus according to one or more of claims 8 to 15, characterised by an optical resonator of the laser (1), which is periodically wavelength-modulated, wherein the modulation-frequency signal portions of the infrared detector (10, 20, 30) arising in the process serve, as a result of the fluctuation of laser emission, as an error variable in an integral control loop for maximising the respective emissions.

## Revendications

1. Procédé pour calculer la concentration d'un gaz déterminé dans un mélange gazeux, le mélange gazeux recevant périodiquement et en alternance des rayons laser d'intensité donnée et le rayonnement sortant du mélange gazeux étant transformé en un signal électrique dont les amplitudes respectives sont dépendantes de l'absorption et de la transmission de la lumière laser, caractérisé en ce que
- les rayons lasers sont sélectionnés de telle façon qu'ils présentent une longueur d'onde caractéristique pour le gaz concerné et une longueur d'onde non caractéristique voisine dans le spectre d'émission du laser,
- en ce que le signal électrique est décomposé dans ses composantes de Fourier,
- en ce que les composantes de Fourier sont présentées comme un train de composantes de Fourier qui se répète et comprend des paires de composantes de Fourier, et
- en ce que, à partir du train de composantes de Fourier, on compare les amplitudes des composantes de Fourier impaires et impaires qui constituent respectivement une paire de composantes de Fourier afin de calculer la concentration du gaz concerné.

2. Procédé selon la revendication 1, caractérisé en ce que les amplitudes d'au moins une fréquence de Fourier impaire sont mises en rapport avec celles d'au moins une fréquence de Fourier paire et en ce que ce rapport de proportion est une référence pour l'absorption caractéristique.

3. Procédé selon au moins l'une des revendications précédentes, caractérisé en ce qu'au moins une composante de Fourier paire du signal électrique, de préférence la deuxième, prend une valeur maximale.

4. Procédé selon au moins l'une des revendications ci-dessus, caractérisé en ce que l'émission des impulsions de rayonnement utilisées se fait avec une puissance respectivement constante et en ce que les centres des impulsions présentent sont distants de la demi-période d'impulsion.

5. Procédé selon au moins l'une des revendications ci-dessus, caractérisé en ce que les phases d'émission ont respectivement la même longueur avec les deux longueurs d'onde et sont séparées entre elles par des phases sans émission respectivement de même durée.

6. Procédé selon la revendication 5, caractérisé en ce que les phases d'émission respectives et les phases sans émission sont de même durée.

7. Dispositif pour l'application du procédé selon la revendication 1 avec une source lumineuse monochromatique qui émet périodiquement et en alternance de la lumière ayant au moins deux longueurs d'onde, avec un détecteur pour la réception du rayonnement sortant du mélange gazeux et pour la transformation de ce rayonnement reçu en un signal électrique, caractérisé par un appareil (14, 15, 16, 17, 18, 19; 24, 25, 26, 27, 28, 29; 34, 35, 36, 37, 38, 39) pour la décomposition du signal électrique en ses composantes de Fourrier, les composantes de Fourrier étant présentées comme un train se répétant et comprenant des paires de composantes de Fourier et la concentration du gaz concerné étant calculée à partir des amplitudes des composantes de Fourier paires et impaires qui forment respectivement une paire de composantes de Fourier.

8. Dispositif selon la revendication 7, caractérisé en ce que le gaz concerné est de l'ammoniac et la source lumineuse (1) un laser, notamment un laser ¹³C₁₆O₂, qui émet périodiquement et en alternance un rayonnement de la transition quantique P8II du spectre de rotation/vibration et d'une transition voisine.

9. Dispositif selon les revendications 7 et 8, caractérisé en ce qu'on prévoit un montage (20-29) avec lequel les sections (40, 41) du signal électrique (40,41) attribuées aux deux longueurs d'onde s'équilibrent.

10. Dispositif selon la revendication 9, caractérisé en ce que, à l'aide d'un organe de réglage (21) du montage (20-29), les impulsions du signal électrique peuvent être équilibrées entre elles de telle façon que les composantes de Fourier impaires disparaissent à la sortie d'un amplificateur (23) et que, aux sorties d'amplificateurs (13 et 33) et avec une position identique d'organes de réglage (11 et 31) correspondants, il n'apparaît que des composantes de Fourier impaires qui ont été causées par le gaz concerné dont la concentration doit être calculée.

11. Dispositif selon les revendications 7 à 10, caractérisé en ce que le laser (1) est conçu de telle manière que la durée d'émission de l'impulsion lumineuse soit réduite ou augmentée avec un centrage au milieu pour la longueur d'onde à laquelle le laser (1) émet la plus grande puissance.

12. Dispositif selon l'une des revendications 7 à 11, caractérisé en ce qu'on prévoit un montage mélangeur avec symétrie qui est associé à un signal de la deuxième fréquence de Fourier de la période d'émission (8).

13. Dispositif selon au moins l'une des revendications 7 à 12, caractérisé par des moyens avec lesquels des produits mixtes (14, 24, 34) sont soumis après un filtrage dans un appareil chacun (15, 25, 35) à un redressement synchrone (16, 26, 36) chacun qui est commandé avec un signal de la première fréquence de Fourier de la période d'émission (9).

14. Dispositif selon au moins l'une des revendications 7 à 13, caractérisé par un montage de quotient (19, 29, 39) au moyen duquel est généré un rapport de signal constitué du produit redresseur (18, 28, 38) filtré et de la part identique du produit mixte (17, 27, 37), une grandeur indépendante de l'intensité d'émission de la source lumineuse (1) et des réductions de transmission non spectrales.

15. Dispositif selon au moins l'une des revendications 7 à 14, caractérisé en ce que les amplitudes de signal issues d'un détecteur, notamment d'un détecteur infrarouge (20), qui proviennent de l'émission de la source lumineuse (1) avec séquence / longueur d'onde, sont amenées en tant que signal de défaut à une boucle de régulation proportionnelle qui règle le gain séquentiel du signal du détecteur infrarouge (20) et la durée d'émission.

16. Dispositif selon au moins l'une des revendications 8 à 15, caractérisé par un résonateur optique du laser (1) qui est modulé périodiquement par la longueur d'onde, les parts de signal avec fréquence de modulation du détecteur infrarouge (10, 20, 30) qui se forment alors servant à la maximisation des émissions respectives en raison de la fluctuation de l'émission laser comme grandeur d'erreur dans une boucle de régulation intégrale.
